Europäisches Patentamt

European Patent Office

Office européen des brevets

(19)

(11) Veröffentlichungsnummer: **0 014 406**
**B1**

# (12) EUROPÄISCHE PATENTSCHRIFT

(45) Veröffentlichungstag der Patentschrift:
26.08.81

(21) Anmeldenummer: **80100424.3**

(22) Anmeldetag: **28.01.80**

(51) Int. Cl.³: **C 07 C  125/04,** C 01 B  19/00 //
(C07C125/04, 125/065, 125/073)

(54) Verfahren zur Abtrennung von Selen, Selenverbindungen, Schwefel und/oder Schwefelverbindungen aus diese Elemente bzw. Verbindungen aufweisenden Urethanen.

(30) Priorität: **09.02.79 DE 2904929**

(43) Veröffentlichungstag der Anmeldung:
**20.08.80 Patentblatt 80/17**

(45) Bekanntmachung des Hinweises auf die Patenterteilung:
**26.08.81 Patentblatt 81/34**

(84) Benannte Vertragsstaaten:
**BE DE FR GB IT NL**

(56) Entgegenhaltungen:
**US-A-4 130 633**

(73) Patentinhaber: **BAYER AG, Zentralbereich Patente, Marken und Lizenzen, D-5090 Leverkusen 1, Bayerwerk (DE)**

(72) Erfinder: **Scholl, Hans-Joachim, Dr., Rudolf-Sohm-Strasse 28, D-5000 Koeln 80 (DE)**

EP 0 014 406 B1

# Verfahren zur Abtrennung von Selen, Selenverbindungen, Schwefel und/oder Schwefelverbindungen aus diese Elemente bzw. Verbindungen aufweisenden Urethanen

Die vorliegende Erfindung betrifft ein neues Verfahren zur Abtrennung von Selen, Selenverbindungen, Schwefel und/oder Schwefelverbindungen aus diese Elemente bzw. Verbindungen enthaltenden Urethanen, wie sie beispielsweise bei der Urethansynthese aus organischen Nitroverbindungen, Kohlenmonoxid und organischen Hydroxylverbindungen unter Verwendung der genannten Elemente bzw. Verbindungen als Katalysator bzw. Cokatalysator anfallen.

Selen und/oder anorganische bzw. organische Selenverbindungen stellen wertvolle Katalysatoren bzw. Cokatalysatoren bei der Herstellung von Urethanen beispielsweise aus organischen Nitroverbindungen, Kohlenmonoxid und organischen Hydroxylverbindungen dar (vgl. z.B. US-PS 3 895 054, US-PS 3 956 360, GB-PS 1 485 108, GB-PS 1 486 399 oder deutsche Patentanmeldungen P 28 08 980.7, P 28 08 990.9 bzw. 28 38 754.4).

Die bei diesen Synthesen anfallenden Urethane enthalten oft noch Spuren an Selen, das in Form von elementaren Selen oder in Form von anorganischen oder organischen Selenverbindungen vorliegen kann. Insbesondere führt die Kombination des Selens mit organischen Verbindungen bei den beispielhaft genannten Verfahren sehr häufig zur Bildung von Organo-selenverbindungen oder anderen löslichen Selenverbindungen, die zusammen mit dem bei der Umsetzung gebildeten Urethan in Lösung bleiben und bei Entfernung der, in den meisten Fällen als Lösungsmittel eingesetzten organischen Hydroxylverbindungen das Urethan verunreinigen.

Wegen der Toxizität und der Kosten des Selens ist es notwendig, dass Selen möglichst weitgehend aus den gebildeten Urethanen abzutrennen und das abgetrennte Selen in einer Form zu isolieren, die sich zur Wiederverwendung als Katalysator eignet.

Es mangelt daher auch nicht an Versuchen, Verfahren zur Reinigung von Selen-haltigen Urethanen zur Verfügung zu stellen (vgl. z.B. US-PSen 4 038 375, 4 038 376, 4 038 377, 4 041 139, 4 055 629 und 4 055 630), in denen die Reinigung durch Flüssig-Flüssig-Extraktion oder durch Metalloxide und Metallsalze wie z.B. Quecksilberverbindungen erfolgte. Selbst bei aufwendigen Verfahrensweisen und selbst bei Mitverwendung von toxikologisch bedenklichen Substanzen wird in der Regel nach diesen Verfahren nur eine unzureichende Entfernung des Selens erzielt. Einen gewissen Fortschritt stellt das Verfahren der US-PS 4 130 633 dar, bei welchem zur Entfernung des Selens bzw. der Selenverbindungen wässrige Wasserstoffperoxidlösungen eingesetzt werden und somit der Einsatz von toxikologisch bedenklichen Substanzen wie z.B. Quecksilberverbindungen entfällt. Dennoch ist auch das Verfahren gemäss US-PS 4 130 633 mit schwerwiegenden Mängeln behaftet, weil auch die hierbei anfallenden Urethane wegen ihres noch zu hohen Restanteils an Selen für eine grosstechnische Weiterverwendung ungeeignet sind, und weil auch die zusätzliche Abtrennung von in der Urethanlösung verbleibendem Wasserstoffperoxid einen weiteren, nicht unproblematischen Verfahrensschritt darstellt.

Es war daher die Aufgabe der vorliegenden Erfindung, ein verbessertes Verfahren zur Reinigung von selenhaltigen Urethanen zur Verfügung zu stellen, bei welchem auf einfache Weise der Selenanteil im Urethan drastisch reduziert werden kann, und bei welchem die Bildung von Wasserstoffperoxid-haltigen Urethanen oder Urethanlösungen vermieden wird.

Diese Aufgabe konnte überraschenderweise durch das nachstehend näher erläuterte erfindungsgemässe Verfahren gelöst werden, bei welchem die geschilderten Verfahrensmängel der Verfahren des Standes der Technik weitgehend entfallen.

Überraschenderweise wurde auch gefunden, dass sich die nachstehend beschriebene erfindungsgemässe Massnahme auch hervorragend zur Entfernung von Schwefel oder Schwefelverbindungen aus Urethanen eignet.

Gegenstand der vorliegenden Erfindung ist daher ein Verfahren zur Abtrennung von Selen, Selenverbindungen, Schwefel und/oder Schwefelverbindungen aus, diese Elemente und/oder Verbindungen enthaltenden Urethanen, dadurch gekennzeichnet, dass man, bei 20 bis 110 °C als Flüssigkeit, Schmelze oder Lösung in einem inerten, mit Wasser nicht mischbaren Lösungsmittel vorliegende, Selen, Selenverbindungen, Schwefel und/oder Schwefelverbindungen enthaltende Urethane innerhalb des genannten Temperaturbereichs mit 0,1 bis 100 Gew.-%, bezogen auf Urethan, einer wässrigen Permanganatlösung innig durchmischt, anschliessend wässrige und feste Bestandteile von der organischen Phase trennt und die Urethane aus der organischen Phase isoliert.

Die erfindungsgemäss einzusetzenden Urethane – hierunter sind im Rahmen der vorliegenden Erfindung insbesondere eine oder zwei Urethangruppen aufweisende Verbindungen zu verstehen – können beispielsweise aus einer mit Selen oder Schwefel katalysierten Umsetzung einer organischen, vorzugsweise aromatischen Nitroverbindung mit Kohlenmonoxid und einer organischen Hydroxylverbindung wie z.B. Äthanol oder Methanol stammen. Die Art der Aufarbeitung der rohen Urethanprodukte bei der Durchführung des erfindungsgemässen Verfahrens richtet sich nach den physikalischen Eigenschaften des jeweiligen Urethans. So können bei Raumtemperatur flüssige Urethane oder durch Erhitzen auf eine Temperatur bis 10 °C unzersetzt schmelzbare Urethane wie z.B. O-Methyl-N-phenyl-urethan oder O-Äthyl-N-phenyl-urethan in Substanz, d.h. als Flüssigkeit oder Schmelze bei erfindungsgemässen Verfahren eingesetzt werden, während beim Einsatz von oberhalb 110 °C schmelzenden Urethanen wie z.B. 2,4-Bis-(äthoxycarbonylamino)-toluol oder 2,4-Bis-(methoxycarbonylamino)-toluol diese in in inerten Lösungsmitteln wie z.B. Toluol, den isomeren Xylolen oder Chlorbenzol gelöster Form zum Einsatz gelangen. Ausserdem werden nicht unzersetzt destillierbare Urethane, wie z.B. die bereits genannte 2,4-Bis-(äthoxycarbonylamino)-toluol und 2,4-Bis(methoxycarbonylamino)-toluol vorzugsweise nach Abtrennung von unlöslichen Bestandteilen aus der alkoholischen Rohlösung durch Kristallisation abgetrennt. Das verbleibende kolloidale Selen und/oder lösliche Selenverbindungen bzw. Schwefel und/oder Schwefelverbindungen enthaltende Urethan wird anschliessend vorzugsweise in einem Lösungsmittel der beispielhaft genannten Art aufgelöst, die Lösung von gegebenenfalls ausfallenden Bestandteilen wie beispielsweise bei der Synthese mitverwendeten Basen oder Salzen oder anderen unlöslichen Bestandteilen durch Filtration befreit und dem erfindungsgemässen Verfahren zugeführt. Hieraus geht hervor, dass auch unterhalb 110 °C unzersetzt schmelzbare, jedoch nicht unzersetzt destillierbare Urethane vorzugsweise unter Mitverwendung eines Lösungsmittels erfindungsgemäss behandelt werden.

Unzersetzt destillierbare und bei Raumtemperatur flüssige bzw. durch Erwärmen auf maximal 110 °C unzersetzt schmelzbare Urethane können vor ihrer destillativen Reindarstellung als Flüssigkeit bzw. Schmelze oder unter Mitverwendung eines Lösungsmittels der beispielhaft genannten Art der erfindungsgemässen Behandlung unterzogen werden.

Bei Mitverwendung der beispielhaft genannten Lösungsmittel werden im allgemeinen bei der Durchführung des erfindungsgemässen Verfahrens 5 bis 50-gew.-%ige Lösungen der Urethane eingesetzt.

Beim erfindungsgemässen Verfahren werden beliebige wässrige Permanganatlösungen eingesetzt; vorzugsweise handelt es sich um wässrige Kaliumpermanganat-Lösungen, insbesondere in einer Konzentration von 1 bis 10 Gew.-%. Diese wässrigen Permanganatlösungen werden zur Selenabtrennung in einer Menge von 0,1 bis 100 Gew.-%, vorzugsweise 1 bis 25 Gew.-% und zur Schwefelabtrennung in einer Menge von 1 bis 100, vorzugsweise 10–60 Gew.-%, bezogen auf zu reinigendes Urethan eingesetzt.

Im allgemeinen enthalten die erfindungsgemäss zu behandelnden Urethane 0,01 bis 2 Gew.-% an freiem und/oder in Form von Selenverbindungen weitgehend unbekannter Konstitution gebundenem Selen bzw. 0,1 bis 20 Gew.-% an freiem und/oder in Form von Schwefelverbindungen weitgehend unbekannter Konstitution gebundenem Schwefel.

Die Menge an Permanganat sollte vorzugsweise so bemessen werden, dass für jedes Mol der genannten Elemente bzw. Verbindungen 1 bis 10 Mol Permanganat zur Verfügung stehen.

Die Durchführung des erfindungsgemässen Verfahrens erfolgt im Temperaturbereich zwischen 20 und 110 °C, vorzugsweise zwischen 50 und 100 °C durch inniges Durchmischen des zu reinigenden Urethans bzw. seiner Lösung mit der wässrigen Permanganatlösung während eines Zeitraumes von ca. 1 Minute bis 2 Stunden, vorzugsweise von 5 bis 60 Minuten. Das Durchmischen erfolgt vorteilhafterweise durch Verwendung geeigneter Rühraggregate, die eine innige Durchmischung der an sich unverträglichen anorganischen und organischen Phasen gewährleisten. Zur Beschleunigung des Reinigungsvorganges können zusätzlich geeignete Hilfsmittel mit einer grossen aktiven Oberfläche, wie z.B. Aktivkohle, Aluminiumoxid, Siliciumdioxid, Zeolith oder ähnliche Materialien mitverwendet werden.

Im Anschluss an die Durchmischung des Urethans bzw. der Urethanlösung mit der wässrigen Permanganatlösung liegen gewöhnlich drei Phasen vor. Die anfallende wässrige Phase und die feste Phase enthalten das dem Urethan entzogene Selen bzw. den dem Urethan entzogenen Schwefel und können beispielsweise nach herkömmlichen Verfahren zur Selenwiedergewinnung aufgearbeitet werden. Die organische Phase, d.h. das weitgehend schwefel- bzw. selenfreie Urethan bzw. seine Lösung in einem der genannten Lösungsmittel kann durch Kristallisation bzw. Destillation weiter aufgearbeitet werden.

Die nachfolgenden Beispiele dienen zur weiteren Erläuterung des erfindungsgemässen Verfahrens, ohne dieses jedoch einzuschränken. Die in den Beispielen angegebenen Reinheitsangaben der Urethane bzw. Urethanlösungen wurden jeweils aus den Ergebnissen der Gaschromatographie und Flüssigkeitschromatographie errechnet. Die Selenmengen wurden nach der Methode der Atomabsorptionsspektroskopie bestimmt. Die Schwefelmengen wurden nach der Methode von Grote-Krekeler bestimmt.

Beispiel 1

Aus einer selenhaltigen Lösung von 2,4-Bis-(äthoxycarbonylamino)-toluol wurde durch Kristallisation das Rohurethan erhalten, welches in heissem o-Xylol zu einer 10 gew.-%igen Lösung gelöst wurde. Anschliessend wurden 1000 g diese Xylollösung mit 300 ml einer 2-gew.-%igen Natronlauge ausgeschüttelt und mit Wasser neutral gewaschen. Nach Abtrennung der wässrigen Phase wurde das selenhaltige Urethan durch Auskristallisation aus der organischen Phase erhalten. Schmelzpunkt: 128–130 °C, Selengehalt: 0,031 Gew.-%.

10 g des so vorbehandelten Urethans wurden in 60 g o-Xylol gelöst. Die Lösung wird auf 80 °C erwärmt und mit 2 g einer 2-gew.-%igen wässrigen Kaliumpermanganatlösung versetzt. Das Gemisch wurde während 30 Minuten bei 80 °C intensiv gerührt, anschliessend wurde die heisse organische Phase von festen und wässrigen Bestandteilen abgetrennt, durch Abdestillieren eines Teils des Xylols auf die Hälfte ihres ursprünglichen Volumens eingeengt und das gereinigte 2,4-Bis-(äthoxycarbonylamino)-toluol durch Kristallisation aus der eingeengten Lösung in praktisch quantitativer Ausbeute erhalten.
Schmelzpunkt: 131–132 °C, Selengehalt: 0,0045 Gew.-%.

Vergleichsbeispiel zu Beispiel 1

Bei gleicher Verfahrensweise wie in Beispiel 1 jedoch unter Verwendung von 2 g einer 2 gew.-%igen wässrigen Wasserstoffperoxidlösung anstelle der Permanganatlösung erhält man 2,4-Bis-(äthoxycarbonylamino)-toluol mit einem Schmelzpunkt von 130–131 °C und einem Selengehalt von 0,011 Gew.-%.

Beispiel 2

Eine selenhaltige Lösung von O-Äthyl-N-phenyl-urethan in Äthanol, die mit geringen Anteilen Anilin, anorganischer Base und löslichen Metallverbindungen verunreinigt war, wurde unter vermindertem Druck von niedrig siedenden Anteilen befreit. Der Rückstand wurde in heissem Toluol zu einer 30-gew.-%igen Lösung gelöst. 300 g Toluollösung wurde mit 100 ml einer 2 gew.-%igen Natronlauge ausgeschüttelt und mit Wasser neutral gewaschen. Nach Abtrennung der wässrigen Phase wurde das Toluol abdestilliert und das Urethan bei einer Temperatur von 90–94 °C und einem Druck von 0,2 mbar destilliert. Das Urethan fiel in einer 98 gew.-%igen Reinheit an. Der Selengehalt lag bei 0,03 Gew.-%.

30 g des so vorbehandelten Urethans wurden aufgeschmolzen und bei 70 °C mit 5 g einer 4 gew.-%igen Kaliumpermanganatlösung versetzt. Nach intensivem Rühren während 15 Minuten bei 70 °C wurde die heisse organische Phase von festen und wässrigen Bestandteilen getrennt und destilliert. Man erhielt in praktisch quantitativer Ausbeute O-Äthyl-N-phenyl-urethan mit einer ca. 99 gew.-%igen Reinheit und einem Selengehalt von 0,004 Gew.-%.

Vergleichsbeispiel zu Beispiel 2

Bei gleicher Verfahrensweise wie in Beispiel 2 mit 5 g einer 4 gew.-%igen wässrigen Wasserstoffperoxidlösung anstelle der Kaliumpermanganatlösung erhielt man nach Abtrennen der wässrigen Bestandteile ein Rohurethan mit positiver Peroxidprobe (Gelbbraunfärbung einer Kaliumjodid-Lösung in Essigsäure). Von einer Redestillation wurde daher aus Gründen der Vorsicht Abstand genommen. Entsprechend mit Kaliumpermanganatlösung behandelte Urethane zeigen eine negative Peroxidprobe.

Beispiel 3

Gemäss Beispiel 2 werden ein O-Äthyl-N-phenyl-urethan mit folgenden Kenndaten erhalten:
Reinheit: 94,2 Gew.-%
Selengehalt: 0,083 Gew.-%

Eine 20 g Probe wurde aufgeschmolzen und bei 80 °C mit 3 g 4 gew.-%iger Kaliumpermanganatlösung versetzt. Man rührte 30 Minuten bei 80 °C und arbeitete gemäss Beispiel 2 auf. In praktisch quantitativer Ausbeute wurde ein O-Äthyl-N-phenyl-urethan mit folgenden Kenndaten erhalten:

Reinheit: 97,5 Gew.-%
Selengehalt: 0,006 Gew.-%

Beispiel 4

Eine selenhaltige Lösung von O-Methyl-N-phenyl-urethan in Methanol wurde entsprechend Beispiel 2 aufgearbeitet. Man erhält ein Methyl-N-phenyl-urethan mit folgenden Kenndaten:
$Kp_{0,2}$: 78–81 °C, Reinheit 98 Gew.-%
Se-Gehalt: 0,043 Gew.-%.

Eine 20 g Probe wurde aufgeschmolzen und bei 80 °C mit 1 g Zeolith und 3 g 5 gew.-%iger Kaliumpermanganatlösung versetzt. Man rührte 45 Minuten bei 80 °C und arbeitete gemäss Beispiel 2 auf. Praktisch verlustfrei wurde ein O-Methyl-N-phenyl-urethan mit folgenden Daten erhalten:
Reinheit: 99 Gew.-%
Se-Gehalt: 0,005 Gew.-%

Beispiel 5

Eine selenhaltige Lösung von O-Methyl-N-phenyl-urethan in Methanol, die mit geringen Anteilen Anilin, anorganischer Base und gelösten Metallverbindungen verunreinigt war, wurde unter vermindertem Druck von niedrigsiedenden Anteilen befreit. 70 g Rückstand wurde in 150 g heissem Toluol aufgenommen, man filtrierte von Ausfällungen ab und erhielt nach Abtrennung des Toluols 65,5 g rohes O-Methyl-N-phenyl-urethan mit folgenden Daten:
Reinheit: 91 %
Se-Gehalt: 0,375 Gew.-%

Eine 40 g Probe wurde bei 80 °C mit 3 g Zeolith und 7 g einer 6 gew.-%igen Kaliumpermanganatlösung versetzt. Man rührte 40 Minuten bei 80 °C und erhält nach Aufarbeitung gemäss Beispiel 2 praktisch in quantitativer Ausbeute O-Methyl-N-phenyl-urethan mit folgenden Kenndaten:
$Kp_{0,2}$: 78–80 °C, Reinheit 97 Gew.-%
Se-Gehalt: 0,0085 Gew.-%

Beispiel 6

Aus einer selenhaltigen Lösung von 2,4-Bis-(methoxycarbonylamino)-toluol in Methanol wurde durch Kristallisation des 2,4-Bis-(methoxycarbonylamino)-toluol isoliert.
Fp.: 167–169 °C
Reinheit: 95 Gew.-%
Selengehalt: 0,015 Gew.-%

20 g des so vorbehandelten Urethans wurden in 380 g Chlorbenzol gelöst und bei 100 °C mit 3 g einer 6 gew.-%igen wässrigen Kaliumpermanganatlösung versetzt. Man rührte 25 Minuten bei 100 °C und erhält nach Aufarbeitung gemäss Beispiel 1 in praktisch quantitativer Ausbeute 2,4-Bis-(methoxycarbonylamino)-toluol vom
Fp.: 169–170 °C
Reinheit: 96 Gew.-%
Selengehalt: 0,0017 Gew.-%.

Beispiel 7

Eine schwefelhaltige Lösung von O-Äthyl-N-phenyl-urethan in Äthanol, die mit geringen Anteilen Anilin, anorganischer Base und löslichen Metallverbindungen verunreinigt war, wurde entsprechend Beispiel 2 aufgearbeitet. Man erhält O-Äthyl-N-phenyl-urethan mit folgenden Kenndaten:

Kp$_{0,2}$: 89–94 °C,

Reinheit 97 Gew.-%

Schwefelgehalt: 0,37 Gew.-%

Eine 30 g Probe wurde aufgeschmolzen und bei 90 °C mit 10 g 3 gew.-%iger Kaliumpermanganatlösung versetzt. Man rührte 30 Minuten bei 90 °C, trennte die heisse organische Phase von festen und wässrigen Bestandteilen und destillierte. Man erhielt in praktisch quantitativer Ausbeute O-Äthyl-N-phenyl-urethan von 98 gew.-%iger Reinheit und einem Schwefelgehalt von 0,04 Gew.-%.

Beispiel 8

Eine schwefelhaltige Lösung von O-Methyl-N-phenyl-urethan in Methanol wurde entsprechend Beispiel 5 aufbereitet. Man erhielt ein rohes O-Methyl-N-phenyl-urethan mit einer 92 gew.-%igen Reinheit und einem Schwefelgehalt von 1,23 Gew.-%.

Eine 40 g Probe wurde bei 70 °C mit 5 g Zeolith und 20 g einer 6 gew.-%igen Kaliumpermanganatlösung versetzt. Nach intensivem Rühren während 45 Minuten bei 70 °C wurde die heisse organische Phase von festen und wässrigen Bestandteilen getrennt und destilliert. Man erhält in praktisch quantitativer Ausbeute O-Methyl-N-phenyl-urethan mit einer 96 gew.-%iger Reinheit und einem Schwefelgehalt von 0,035 Gew.-%.

**Patentansprüche**

1. Verfahren zur Abtrennung von Selen, Selenverbindungen, Schwefel und/oder Schwefelverbindungen aus, diese Elemente und/oder Verbindungen enthaltenden Urethanen, dadurch gekennzeichnet, dass man, bei 20 bis 110 °C als Flüssigkeit, Schmelze oder Lösung in einem inerten, mit Wasser nicht mischbaren Lösungsmittel vorliegende, Selen, Selenverbindungen, Schwefel und/oder Schwefelverbindungen enthaltende Urethane innerhalb des genannten Temperaturbereichs mit 0,1 bis 100 Gew.-%, bezogen auf Urethan, einer wässrigen Permanganatlösung innig durchmischt, anschliessend wässrige und feste Bestandteile von der organischen Phase trennt und die Urethane aus der organischen Phase isoliert.

2. Verfahren gemäss Anspruch 1, dadurch gekennzeichnet, dass man als Permanganatlösung eine 1 bis 10 gew.-%ige wässrige Kaliumpermanganatlösung verwendet.

**Revendications**

1. Procédé de séparation de sélénium, de composés séléniés, de soufre et/ou de composés sulfurés à partir d'uréthanes contenant ces éléments et/ou composés, caractérisé en ce qu'on mélange intimement à 20–110 °C les uréthanes se présentant sous forme de liquide, de masse fondue ou de solution dans un solvant inerte non miscible avec l'eau, contenant du sélénium, des composés séléniés, du soufre et/ou des composés sulfurés, dans l'intervalle de température cité avec, par rapport à l'uréthane, 0,1 à 100% en poids d'une solution aqueuse de permanganate, on sépare ensuite les constituants aqueux et solides de la phase organique et on isole les uréthanes à partir de la phase organique.

2. procédé selon la revendication 1, caractérisé en ce qu'on utilise comme solution de permanganate une solution aqueuse à 1–10% en poids de permanganate de potassium.

**Claims**

1. A process for separating off selenium, selenium compounds, sulphur and/or sulphur compounds from urethanes containing these elements and/or compounds characterised in that urethanes containing selenium, selenium compounds, sulphur and/or sulphur compounds which are present at from 20 to 110 °C as a liquid, melt or solution in an inert solvent which is immiscible with water, are thoroughly mixed within the said temperature range with from 0.1 to 100% by weight, based on urethane, of an aqueouse permanganate solution, aqueouse and solid constituents are then separated from the organic phase and the urethanes isolated from the organic phase.

2. A process according to claim 1, characterised in that a 1 to 10% by weight aqueous potassium permanganate solution is used as the permanganate solution.